# DEMANDE DE BREVET EUROPEEN

(11) **EP 1 903 260 A1**
(43) Date de publication de la demande: **26.03.2008**
(21) Numéro de dépôt: 07301378.1
(22) Date de dépôt: 19.09.2007
(51) Int. Cl.: F16H 59/10

(54) **Dispositif de commande de mode sport et de retour au mode normal d'une boîte de vitesses automatique pilotée de véhicule automobile**

(30) Priorité: 21.09.2006 WO PCT/FR2006/053869
(71) Demandeur: PEUGEOT CITROËN AUTOMOBILES S.A., 78140 Vélizy Villacoublay (FR)
(72) Inventeur: Le Lievre, Armel, 76360 Montesson (FR)

(57) **Abrégé**

- Le dispositif comporte un levier de vitesses (10) qui peut parcourir les positions de sélection des différents modes automatiques,
- la commande de mode sport et la commande inverse de retour au mode normal sont actionnées, chacune, par impulsion latérale (I) sur le levier de vitesses placé dans la position du mode automatique de conduite normale « D ».
- Véhicules automobiles. Boîtes de vitesses automatiques pilotées des véhicules automobiles. Commandes des boîtes de vitesses automatiques pilotées des véhicules automobiles.

## Description

La présente invention concerne un dispositif de commande de mode sport et de retour au mode normal d'une boîte de vitesses automatique pilotée de véhicule automobile.

Une boîte de vitesses automatique pilotée sélectionne, sans intervention obligatoire du conducteur, le rapport approprié en fonction d'un certain nombre de paramètres comme le régime moteur, la vitesse du véhicule et la position de l'accélérateur. Il existe plusieurs solutions techniques pour réaliser une transmission automatique : boîte automatique à trains épicycloïdaux et convertisseur de couple hydraulique, boîte automatique auto adaptative, boîte mécanique pilotée (BVMP), etc. Une boîte de vitesses mécanique pilotée se caractérise par une gestion électronique de l'embrayage et du passage des rapports.

Une boîte de vitesses automatique comprend, de manière classique, plusieurs programmes désignés P pour frein de parking, R pour marche arrière, N pour point mort (« Neutre ») et D pour conduite normale avec de trois à six rapports (« Drive »).

De nombreux modèles automobiles à boîte de vitesses automatique sont aujourd'hui équipés d'une commande de « mode sport », qui donne la possibilité au conducteur de changer le caractère de la voiture en appuyant sur un bouton poussoir SPORT correspondant. Le sélecteur de mode qui comprend le bouton poussoir ou interrupteur SPORT peut également comporter un interrupteur NEIGE, qui donne la possibilité de conduire selon un « mode neige » adapté à une conduite sur sol de faible adhérence. Le mode sport peut également modifier notamment les lois d'amortissement, le paramétrage de la direction et la réponse à l'accélérateur. Si le véhicule est équipé d'une boîte de vitesses automatique ou pilotée (boîte de vitesses « Easytronic ® », par exemple), les rapports sont passés à des régimes plus élevés.

Pour passer en mode sport ou revenir du mode sport en mode normal, il est nécessaire, comme déjà mentionné, d'appuyer sur un bouton à impulsion, situé généralement à la base du levier de commande de la boîte de vitesses.

Ce bouton à impulsion est situé à un endroit peu accessible et peu visible. Pour actionner ce bouton, il est quasiment nécessaire de quitter la route des yeux pendant un court instant. Une telle manoeuvre n'est pas, par conséquent, sans risques pour la sécurité de la conduite, en particulier lorsque le conducteur souhaite enclencher le mode sport à un moment où il a besoin du potentiel maximal d'accélération de son véhicule.

Le but de la présente invention est de fournir un dispositif de commande de mode sport et de retour au mode normal d'une boîte de vitesses automatique (ou pilotée) de véhicule automobile, qui facilite la manoeuvre de passage au mode sport et celle de retour au mode normal, qui ne présente pas les risques déjà mentionnés des dispositifs connus de l'art antérieur, en particulier qui n'oblige pas le conducteur à quitter la route des yeux un court instant pour activer ou désactiver la commande de mode sport.

Un autre but de la présente invention est de fournir un tel dispositif, dont la structure et le fonctionnement soient conçus pour éviter tout déclenchement intempestif de la commande de mode sport, en particulier lors du passage du mode manuel au mode automatique ou lorsque le mode neige est sélectionné.

C'est également un but de la présente invention de fournir un dispositif de commande de mode sport et de retour au mode normal d'une boîte de vitesses automatique de véhicule automobile, qui soit de conception simple, de montage aisé, de fonctionnement très simple, et qui soit ergonomique, robuste, fiable et économique.

Pour parvenir à ces buts, la présente invention conçoit un nouveau dispositif de commande de mode sport et de retour au mode normal - appelé aussi commande de mode sport/normal - d'une boîte de vitesses automatique pilotée de véhicule, notamment de véhicule automobile, comportant un levier de vitesses qui peut parcourir les différentes positions correspondant à des modes et/ou des rapports de vitesse différents, laquelle commande de mode sport/normal est actionnée par impulsion latérale sur le levier de vitesses placé dans la position du mode automatique de conduite normale (position « D » pour « Drive »).

Selon un mode préféré de réalisation de l'invention, les différentes positions sont réparties sur deux couloirs de la grille de sélection de vitesses: un premier couloir avec une grille de positions, sensiblement en escalier, pour les modes « P », « R », « N », « D », au moins, et un second couloir pour une commande en mode manuel « M », et la commande de mode sport/normal est actionnée avec le levier de vitesses placé dans la position du mode automatique de conduite normale « D ».

Selon le mode préféré de réalisation de l'invention également, la première impulsion sur le levier de vitesses qui commande le mode sport/normal est neutralisée (pas de prise en compte de l'impulsion) lors du déplacement du mode « M » au mode « D », de manière à éviter tout actionnement intempestif de cette commande.

Selon le mode préféré de réalisation de l'invention également, la boîte de vitesses comporte aussi un mode « neige », et le dispositif de commande est inhibé lorsque le mode neige est actif.

De préférence, les impulsions de commande du mode sport/normal sont données selon une direction et un sens, qui sont la direction et le sens selon lesquels le levier de vitesses est amené dans la position du mode automatique de conduite normale (« Drive »).

De préférence également, la direction et le sens des impulsions de commande du mode sport/normal sont la direction et le sens du mouvement du levier de vitesses lorsque celui-ci passe de la position du mode « M » au mode automatique de conduite normale « D ».

De manière préférentielle, il est prévu un contacteur, placé à la base du levier de vitesses, pour recevoir lesdites impulsions d'actionnement de la commande en mode sport/normal, et les impulsions sur le levier de vitesses sont données contre l'action d'un moyen de rappel élastique, de type ressort.

Les impulsions de commande du mode sport/normal sont transmises à un calculateur électronique de la boîte de vitesses, qui est programmé pour ne pas prendre en compte la première impulsion, et ne tenir ainsi compte que des impulsions doubles lors du passage du mode « M » au mode « D ».

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1A représente, de manière schématique, les différentes positions du levier de vitesses d'un exemple de boîte de vitesses automatique selon l'art antérieur,
- la figure 1B représente, de manière schématique, en perspective, le levier de vitesses et la grille de sélection de la boîte de vitesses de la figure 1A, avec une commande de mode sport selon l'art antérieur,
- la figure 2A représente, de manière schématique, les différentes positions du levier de vitesses d'une boîte de vitesses automatique avec une commande de mode sport/normal selon un mode de réalisation préféré de la présente invention, et
- la figure 2B représente, de manière schématique, en perspective, le levier de vitesse et la grille de sélection de la boîte de vitesses de la figure 2A, et
- la figure 3 représente, de manière schématique, le levier de vitesses et son montage dans le boîtier de sélection de vitesses.

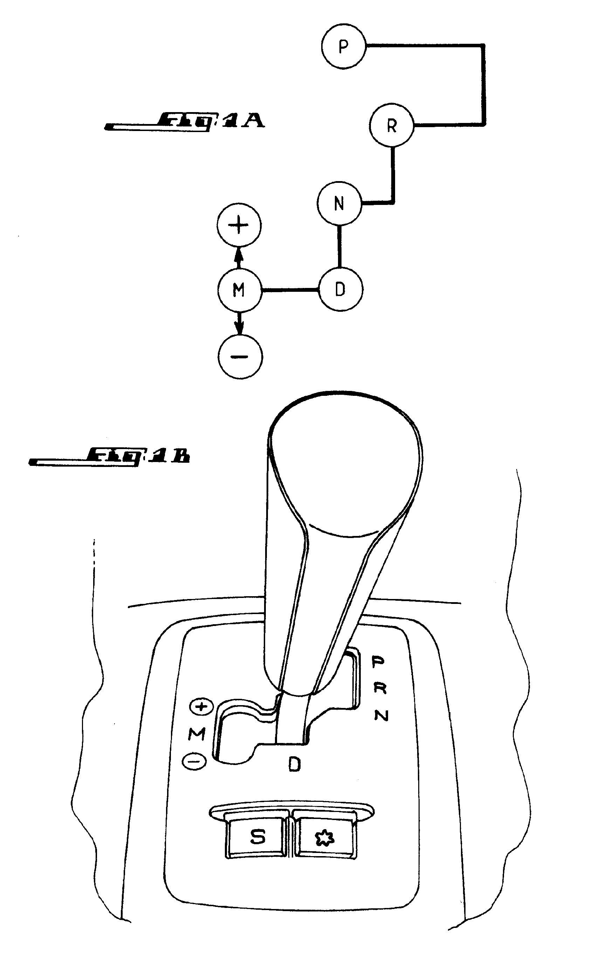

En référence au dessin des figures 1A et 1B, on a représenté une grille de sélection de vitesses d'une boîte de vitesses automatique à gestion électronique, selon un exemple connu de l'art antérieur.

La commande de la boîte est à double couloir avec, côté droit, une grille en escalier PRND, et côté gauche, accessible depuis la position « D » (Drive), une commande manuelle séquentielle (de type « Tiptronic ® System Porsche », par exemple) qui offre au conducteur une conduite « active ». Celle-ci lui permet, par une impulsion vers l'avant ou vers l'arrière de « monter » ou « descendre » ses vitesses. Le système reprend automatiquement le premier rapport à l'arrêt, à un stop, par exemple, et, à l'inverse, en montant le régime moteur, passe le rapport supérieur avant tout surrégime afin de protéger la mécanique par sécurité. Deux boutons poussoirs (figure 1B) permettent de sélectionner les programmes spécifiques Sport et Neige. Le programme spécifique sport est commandé par le bouton poussoir marqué « S ».

Comme mentionné précédemment, ces boutons poussoirs de mode sport et mode neige sont situés à un endroit peu accessible et peu visible, et leur manoeuvre n'est pas sans risque pour la sécurité de la conduite.

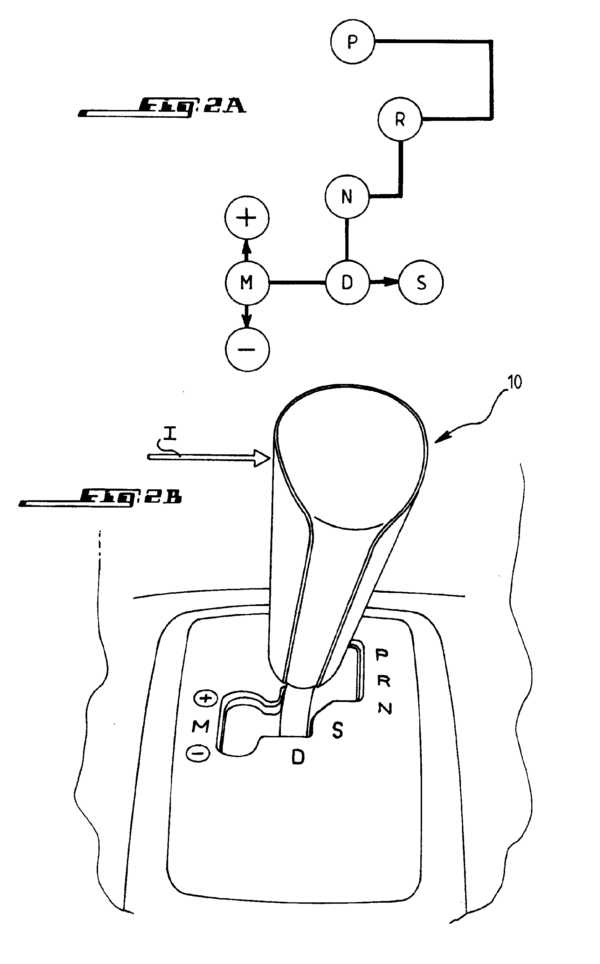

La présente invention recourt à un moyen différent d'actionnement de la commande du mode sport, décrit ci-après, en référence aux dessins des figures 2A et 2B.

La grille de sélection des vitesses des figures 2A et 2B est semblable à celle, connue de l'art antérieur, représentée sur les figures 1A et 1B, avec, côté droit, une grille en escalier PRND, et côté gauche, accessible depuis la position « D », une commande manuelle « M » à différents rapports.

Il est prévu également une possibilité de conduite en mode sport. L'actionnement de la commande de ce mode est réalisé par impulsion sur le levier de vitesses en position « Drive ».

Cette impulsion, de direction et de sens illustrés par la flèche I de la figure 2B, est, selon le mode préféré de réalisation de l'invention, une double impulsion selon I. La direction de la double impulsion I est la direction donnée par le couloir qui relie la position du mode manuel « M » à la position du mode automatique « D », et le sens est celui qui pousse le levier vers la droite (vers la position marquée S sur la figure 2B), vers l'extérieur du segment joignant la position « M » à la position « D ».

L'impulsion I d'actionnement de la commande est une impulsion double lors du passage du mode « M » au mode « D », pour éviter que la commande soit déclenchée de manière accidentelle, involontaire, intempestive, lors du passage du mode manuel « M » au mode automatique « D ». En d'autres termes, l'impulsion I n'est pas prise en compte lors du passage du mode « M » au mode « D » (c'est la première impulsion), de manière à éviter ledit déclenchement intempestif de la commande de mode sport/normal.

De plus, avec une boîte de vitesses qui comporte aussi un mode « neige », la commande décrite est inhibée lorsque le mode neige est activé.

L'actionnement de la commande du mode sport est ainsi rendu plus facile: une très simple double impulsion vers la droite sur le levier de vitesses en position « D ». De la même façon, le retour au mode normal se fait très facilement par une double impulsion vers la droite sur le levier de vitesses dans la position « D ».

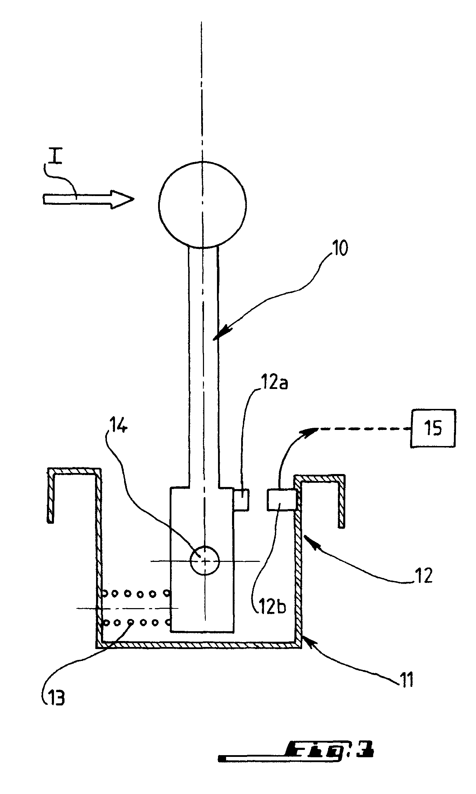

Un exemple de montage du levier de vitesses, non limitatif de l'objet et de la portée de la présente invention, est représenté de manière schématique sur le dessin de la figure 3. Le levier de vitesses, référencé 10, est, de manière classique, monté articulé sur un axe 14 solidaire du boîtier 11 de sélection de vitesses. Un contacteur 12, placé à la base du levier de vitesses 10, en deux parties 12a et 12b, permet d'enregistrer les impulsions I du passage en mode sport à chaque contact de la partie mobile 12a, liée au levier de vitesses 10, avec la partie fixe 12b, complémentaire et en regard de la partie 12a, fixée au boîtier fixe 11. Chaque contact entre les parties fixe et mobile du contacteur 12, par conséquent chaque impulsion I, est adressé sous forme de signal à un calculateur électronique 15 programmé pour ne pas prendre en compte la première impulsion, ne tenir ainsi compte que des impulsions doubles lors du passage du mode « M » au mode « D » et inhiber la fonction lorsque le mode neige est activé.

Le contacteur 12 peut être situé à la place du contacteur existant dans les systèmes de sélection de vitesses de l'art antérieur.

Le calculateur 15 peut être le calculateur électronique de la boîte de vitesses automatique.

Les impulsions I sur le levier de vitesses 10 sont données contre l'action d'un moyen de rappel élastique, de type ressort 13.

On a réalisé, de la manière décrite ci-dessus, un dispositif qui permet d'enclencher (ou de déclencher) la commande de mode sport de la manière la plus simple qui soit, et en toute sécurité.

Le mode sport, selon la présente invention, n'est pas positionné directement le long de la grille de sélection de vitesses. Il n'y a pas de passage obligé par le mode sport lors de la sélection d'autres rapports de vitesse, par conséquent, pas de risque de créer une réponse non désirée du moteur qui pourrait surprendre le conducteur.

De plus, ce dispositif est de structure simple. Il peut être adapté aux modèles existants de l'art antérieur avec un surcoût relativement faible.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Dispositif de commande de mode sport et de retour au mode normal d'une boîte de vitesses automatique pilotée de véhicule, notamment de véhicule automobile, comportant un levier de vitesses (10) qui peut parcourir les positions de sélection des différents modes automatiques les positions de sélection des différents modes étant réparties sur deux couloirs : un premier couloir avec une grille de positions pour les modes automatiques « P », « R », « N », « D », au moins, et un second couloir pour une commande en mode manuel « M », **caractérisé en ce que** la commande de mode sport/normal est actionnée par une double impulsion (I) latérale exercée sur le levier de vitesses (10) selon une direction et un sens qui sont la direction et le sens du mouvement du levier de vitesses (10) lorsque celui-ci passe de la position du mode manuel « M » au mode automatique de conduite normale « D ».

2. Dispositif selon la revendication 1, **caractérisé en ce que** la première impulsion sur le levier de vitesses qui commande le mode sport/normal est neutralisée lors du déplacement du mode « M » au mode « D », de manière à éviter tout actionnement intempestif de la commande de mode sport/normal.

3. Dispositif selon la revendication 1 ou 2, **caractérisé en ce que** ladite boîte de vitesses comporte aussi un mode « neige » et **en ce que** ledit dispositif de commande de mode sport est inhibé lorsque le mode neige est actif.

4. Dispositif selon l'une quelconque des revendications 1 à 3, **caractérisé en ce qu'**il est prévu un contacteur (12), placé à la base du levier de vitesses (10), pour recevoir lesdites impulsions (I) d'actionnement de la commande en mode sport/normal.

5. Dispositif selon l'une quelconque des revendications 1 à 4, **caractérisé en ce que** les impulsions sur le levier de vitesses (10) sont données contre l'action d'un moyen de rappel élastique, de type ressort (13).

6. Dispositif selon l'une des revendications 3 à 5, **caractérisé en ce que** ladite impulsion (I) est transmise à un calculateur électronique (15) de la boîte de vitesses qui est programmé pour ne pas prendre en compte la première impulsion, ne tenir ainsi compte que des impulsions doubles lors du passage du mode « M » au mode »D » et inhiber la fonction lorsque le mode neige est actif.
